(19) Europäisches Patentamt

European Patent Office

Office européen des brevets

(11) **EP 0 581 094 B1**

(12) **EUROPÄISCHE PATENTSCHRIFT**

(45) Veröffentlichungstag und Bekanntmachung des Hinweises auf die Patenterteilung:
**19.01.2000 Patentblatt 2000/03**

(51) Int. Cl.$^7$: **C08K 11/00**, C08L 23/22, C09K 3/22
// C08J11/04

(21) Anmeldenummer: **93111097.7**

(22) Anmeldetag: **12.07.1993**

(54) **Die Verwendung von Polyisobutylen für die Entsorgung schadstoffhaltiger Feststoffe und Stäube**

Use of polyisobutylene for the disposal of contaminated solids and dusts

Utilisation de polyisobutylène pour l'évacuation des solides et poussières contaminés

(84) Benannte Vertragsstaaten:
**BE DE ES FR GB IT NL**

(30) Priorität: **22.07.1992 DE 4224097**

(43) Veröffentlichungstag der Anmeldung:
**02.02.1994 Patentblatt 1994/05**

(73) Patentinhaber:
**BASF Aktiengesellschaft
67063 Ludwigshafen (DE)**

(72) Erfinder:
• **Isbarn, Gunther, Dr.
D-6700 Ludwigshafen (DE)**
• **Fauth, Karl-Heinz
D-6719 Wattenheim (DE)**
• **Kolk, Erich, Dr.
D-6702 Bad Duerkheim (DE)**

(56) Entgegenhaltungen:
**DE-C- 854 846          JP-A- 52 147 373
US-A- 4 280 922          US-A- 4 780 233**

**Beschreibung**

Die vorliegende Erfindung betrifft die Verwendung von Polyisobutylen für die Entsorgung schadstoffhaltiger Feststoffe und Stäube. Außerdem betrifft die vorliegende Erfindung ein neues Verfahren zur sicheren Entsorgung schadstoffhaltiger Feststoffe und/oder Stäube, bei welchem die betreffenden Feststoffe oder Stäube mit thermoplastisch verformbaren polymeren Materialien vermischt werden, wonach die resultierenden Gemische gegebenenfalls weiterverarbeitet werden.

Es ist allgemein bekannt, Schadstoffe bzw. schadstoffhaltige Feststoffe oder Stäube zu Zwecken ihrer Deponierung oder Endlagerung in Zement oder in Glas einzuschließen. Solche Verfahren sind indes nicht für alle schadstoffhaltigen Feststoffe oder Stäube geeignet oder vom Aufwand her gerechtfertigt.

Es hat deshalb auch nicht an Versuchen gefehlt, schadstoffhaltige Feststoffe oder Stäube in thermoplastisch verarbeitbare polymere Materialien einzuschließen. Solche Materialien lassen sich mit erheblich geringerem Energieaufwand verarbeiten und transportieren als Glas oder Zement. Indes sind die resultierenden Gemische nicht immer wasserfest, da die in ihnen enthaltenen Schadstoffe durch Wasser ausgewaschen oder allmählich ausgelaugt werden. Daher kann bei ihrer Endlagerung auf einer Deponie eine Grundwassergefährdung nicht sicher ausgeschlossen werden. Die Gemische sind - kurz gesagt - nicht deponiefähig.

Die Verwendung von Polyisobutylen zum Unterdrücken des Verstäubens beispielsweise von Kohle- oder Koksstaub ist aus der US-A-4 780 233 bekannt. Hierzu werden Spuren von Polyisobutylen einer Öl-Tensid-Mischung zugesetzt, welche dann in Form einer Öl-in-Wasser-Emulsion auf die betreffenden Stäube gesprüht wird.

In ähnlicher Weise werden Polyisobutylen enthaltende Mischungen auf der Basis verbrauchter Flugzeugöle (vgl. die SU-A-770 156) oder auf der Basis von Destillationsrückständen der Styroldestillation (vgl. die SU-A-675 127) zur Verfestigung des Bodens von Flugplätzen angewandt.

Die Klebrigkeit von Polyisobutylen wird außerdem für Staubsammelplatten genutzt, welche in Operationssälen, Computerräumen oder elektronischen Labors Verwendung finden (vgl. die JP-A-52-147 373).

Indes werden bei all diesen Techniken die behandelten oder gesammelten Stäube nicht in eine deponiefähige Form gebracht.

Des weiteren sind Formteile wie z.B. Folien aus Polyisobutylen und, bezogen auf die Formteile, bis zu 80 Gew.-% Ruß seit langem bekannt und im Handel erhältlich. Hierbei handelt es sich aber um ein Wertprodukt und der in das Polyisobutylen eingebettete Ruß ist nicht toxisch und als solcher wasserfest und nicht auslaugbar.

Aufgabe der vorliegenden Erfindung ist es, ein neues, einfaches und sicheres Verfahren für die Entsorgung schadstoffhaltiger Feststoffe und/oder Stäube zu finden, wonach die daraus resultierenden Gemische wasserfest sind, gegebenenfalls weiterverarbeitet werden können, und darüber hinaus die in ihnen enthaltenen Schadstoffe auch bei längerer Lagerung auf der Deponie nicht ausgewaschen oder ausgelaugt werden und ins Grundwasser gelangen.

Die Aufgabe der Erfindung konnte einfach, elegant und sicher durch die Verwendung von Polyisobutylen eines viskositätsmittleren Molekulargewichts ($\overline{M}_v$) von $0,1 \cdot 10^6$ bis $1,0 \cdot 10^7$ oder von Blends aus 20 bis 80 Gew.-% dieses Polyisobutylens und aus 20 bis 80 Gew.-% mindestens einem hiermit verträglichen Thermoplasten gelöst werden, wobei die hiermit verträglichen Thermoplaste aus dieser Gruppe Polyester, Polycarbonat, Polyacrylat, Polymethacrylat, Polystyrol oder Polyolefin stammen. Im Hinblick auf den Stand der Technik ist es überraschend, daß gerade die Verwendung von Polyisobutylen die Lösung des hier in Rede stehenden Problems bietet, welches sich schon zahlreichen anderweitigen Lösungsversuchen entzogen hat.

Weiterhin handelt es sich bei dem Gegenstand der vorliegenden Erfindung um ein Verfahren zur sicheren Entsorgung schadstoffhaltiger Feststoffe und/oder Stäube durch deren

Vermischen mit thermoplastisch verformbaren polymeren Materialien und Weiterverarbeiten der resultierenden Gemische, welches dadurch gekennzeichnet ist, daß man als thermoplastisch verformbare polymere Materialien Polyisobutylen eines viskositätsmittleren Molekulargewichts ($\overline{M}_v$) von $0,1 \cdot 10^6$ bis $1,0 \cdot 10^7$ oder Blends aus 20 bis 80 Gew.-% dieses Polyisobutylens und aus 20 bis 80 Gew.-% mindestens einem hiermit verträglichen Thermoplasten verwendet, wobei die hiermit verträglichen Thermoplaste aus der Gruppe Polyester, Polycarbonat, Polyacrylat, Polymethacrylat, Polystyrol oder Polyolefin stammen.

Im folgenden wird dieses neue Verfahren zur sicheren Entsorgung schadstoffhaltiger Feststoffe und/oder Stäube der kürze halber als erfindungsgemäßes Verfahren bezeichnet.

Das erfindungsgemäße Verfahren geht aus vom Vermischen thermoplastisch verformbarer polymerer Materialien mit schadstoffhaltigen Feststoffen oder Stäuben. Aufgrund des physikalischen Zustandes und der Eigenschaften der Feststoffe und Stäube einerseits und der thermoplastisch verformbaren polymeren Materialien andererseits kommen für das Vermischen alle Techniken in Betracht, wie sie auf dem Kunststoffgebiet für die Herstellung von Gemischen allgemein angewandt werden. Beispielhaft seien das Kalandrieren, Kneten oder Extrudieren genannt. Bekanntermaßen können zu diesen Zwecken die handelsüblichen Kalander, Brabender und ein- und zweiwelligen Extruder angewandt werden.

Dabei ist es wesentlich, daß bei diesem Verfahrensschritt als thermoplastisch verformbares polymeres Material Polyisobutylen oder Blends aus Polyisobutylen und mindestens einem hiermit verträglichen Thermoplasten verwendet wird.

Für den erfindungsgemäßen Zweck kommen grundsätzlich die in der Technik üblichen Polyisobutylene in Frage. Üblicherweise haben solche Polyisobutylene ein viskositätsmittleres Molekulargewicht ($\overline{M}_v$ von $0{,}1 \cdot 10^6$ bis $1{,}0 \cdot 10^7$, insbesondere von $0{,}4 \cdot 10^6$ bis $1{,}0 \cdot 10^7$). Bekanntermaßen werden sie durch kationische Polymerisation hergestellt. Verfahren dieser Art werden in den Patentschriften EP-A-0 206 756, EP-A-0 265 053, US-A-4 316 973, GB-A-525 542, GB-A-828 367, EP-A-0 195 333 oder EP-B-0 115 635 beschrieben. Für den erfindungsgemäßen Verwendungszweck sind die handelsüblichen Polyisobutylene, welche von der Fa. BASF unter dem eingetragenen Warenzeichen Oppanol B$^{\circledR}$ vertrieben werden, besonders gut geeignet.

Außer Polyisobutylen sind auch noch Blends aus diesem Polymerisat und mindestens einem hiermit verträglichen Thermoplasten für das erfindungsgemäße Verfahren geeignet. Hierbei wird unter dem Begriff "verträglich" die Tatsache verstanden, daß sich die Komponenten der betreffenden Blends in den jeweils angewandten Mengenverhältnissen homogen miteinander vermischen und auch bei längerer Lagerung nicht wieder entmischen. Thermoplaste, welche in diesem Sinne mit Polyisobutylen verträglich sind, sind beispielsweise Polyester, Polycarbonate, Polyacrylate, Polymethacrylate, Polystyrol und Polyolefine, insbesondere Polymerisate des Ethylens und des Propylens. Hiervon wird Polypropylen ganz besonders bevorzugt verwendet. Unter Polypropylen werden in diesem Zusammenhang sowohl Propylenhomopolymerisate als auch Propylencopolymerisate mit untergeordneten Anteilen einpolymerisierter Comonomerer, insbesondere Ethylen und But-1-en verstanden.

Hierbei ist das erfindungsgemäße Verfahren auch dadurch gekennzeichnet, daß die Blends Polyisobutylen in einer Menge von 20 bis 80 Gew.-% und die hiermit verträglichen Thermoplaste in einer Menge von 20 bis 80 Gew.-% enthalten.

Grundsätzlich kann das erfindungsgemäße Verfahren mit allen schadstoffhaltigen Feststoffen oder Stäuben durchgeführt werden, welche nicht die rasche oder allmähliche Zersetzung von Polyisobutylen und seinen Blends bewirken. Demnach sollte das erfindungsgemäße Verfahren nicht mit solchen schadstoffhaltigen Feststoffen und Stäuben durchgeführt werden, welche hoch radioaktiv sind und/oder die rasche oder allmähliche Depolymerisation von Polyisobutylen und seinen Blends verursachen. Des weiteren sollten hochexplosive Feststoffe und Stäube dem erfindungsgemäßen Verfahren nicht unterworfen werden. Ansonsten aber eignet sich das erfindungsgemäße Verfahren hervorragend für die sichere Entsorgung zahlreicher schadstoffhaltiger Feststoffe und/oder Stäube, wie sie in Industrie und Haushalt bei zahllosen Herstell- und Weiterverarbeitungsverfahren oder ganz einfach bei der Verwendung von Produkten allgemein anfallen. Beispielhaft seien schwermetallhaltige Katalysatorrückstände, Flugasche verunreinigte Schlacke und Kohle, kontaminiertes Erdreich, Asbest und asbesthaltige Produkte oder Abraum aus Bergwerken genannt. Für das erfindungsgemäße Verfahren ist es vorteilhaft, die schadstoffhaltigen Feststoffe vor ihrem Vermischen zu zerkleinern, wenn sie grobteilig - z.B. als große Brocken oder Formteile - vorliegen.

Zwar ist es durchaus möglich und in einzelnen Fällen auch vorteilhaft, die durch das Vermischen der schadstoffhaltigen Feststoffe und/oder Stäube mit den vorstehend genannten thermoplastisch verformbaren polymeren Materialien resultierenden Gemische direkt auf einer Deponie endzulagern. Für das erfindungsgemäße Verfahren ist es indes von Vorteil, die resultierenden Gemische weiterzuverarbeiten. Im Rahmen der vorliegenden Erfindung werden unter "Weiterverarbeiten" all diejenigen Maßnahmen verstanden, welche ganz allgemein die Deponiefähigkeit der resultierenden Gemische verbessern. Beispiele geeigneter Maßnahmen dieser Art sind die Weiterverarbeitung der Gemische zu Granulaten in üblicher und bekannter Weise durch Extrudieren der Gemische und Zerkleinern des aus der Extruderdüse austretenden Materialstranges oder die Herstellung von Formteilen wie Platten, Stangen, Kugeln oder Folien durch Abformverfahren, wie sie auf dem Kunststoffsektor üblich und bekannt sind, insbesondere den Preß-, Kalandrier-, Spritzgieß- oder Blasformverfahren.

Die Anwendung von Polyisobutylenen oder Blends aus Polyisobutylenen mit Thermoplasten bewirkt, daß die betreffenden Gemische, Granulate und Formteile wasserfest und leicht entsorgbar sind. Sie können deshalb ohne Bedenken auf Deponien endgelagert werden, ohne daß dabei die Verunreinigung des Grundwassers durch ausgewaschene oder ausgelaugte Schadstoffe zu befürchten wäre. Dies ist im Hinblick auf die Vielzahl von schadstoffhaltigen Feststoffen und Stäuben, welche mit Hilfe des erfindungsgemäßen Verfahrens entsorgt werden können, ein Vorteil, welcher gar nicht hoch genug eingeschätzt werden kann. Von gleicher Bedeutung ist die Tatsache, daß mit Hilfe des erfindungsgemäßen Verfahrens Asbest und asbesthaltige Materialien sicher entsorgt werden können. Noch ein weiterer Vorteil des erfindungsgemäßen Verfahrens ist, daß es auch mit wiederverwerteten Polyisobutylenabfällen, für welche ansonsten nur die Entsorgung in

Betracht kommt, durchgeführt werden kann, ohne daß hierbei irgendwelche Nachteile in Kauf genommen werden müssen.

Beispiel 1 und 2

Die Entsorgung eines chromhaltigen Phillips-Katalysator-Staubs

Beispiel 1

Versuchsvorschrift:

4 g eines Phillips-Katalysatorstaubs mit einem Chromgehalt von 1,5 Gew.-% wurden auf einem Brabender-Plastographen mit 36 g eines Polyisobutylens (verwendet wurde OPPANOL B$^®$ 50 der Fa. BASF mit einem Viskositätsmittel $\overline{M}_v$ von $0,4 \cdot 10^6$) bei 180°C 10 Minuten lang vermischt, anschließend ausgetragen und zerkleinert. Der Gehalt des Granulats an Katalysatorstaub lag bei 10 Gew.-%.

4 g der auf diese Weise erhaltenen Granulate wurden bei Raumtemperatur (20°C) in 10 g Wasser gelagert und das Wasser in bestimmten Zeitabschnitten auf Chrom hin untersucht.

Nach mehr als 1 Jahr waren immer noch keine Chrompartikel im Wasser feststellbar.

Beispiel 2

8 g des im Beispiel 1 verwendeten Katalysatorstaubes wurden mit einem Blend aus 24 g eines Polyisobutylens (verwendet wurde Oppanol B$^®$ 150 der Firma BASF mit einem Viskositätsmittel $\overline{M}_v$ von $2,8 \cdot 10^6$) und 8 g eines Propylenblockcopolymerisats mit ca. 9 Gew.-% einpolymerisiertem Ethylen (verwendet wurde Novolen$^®$ 2500 HX der Firma BASF) analog dem Beispiel 1 gemischt und zerkleinert.

Entsprechend dem Beispiel 1 wurden 4 g des auf diese Weise erhaltenen Granulats in 10 g Wasser gelagert und das Wasser auf Chrom hin untersucht.

Aus den Beispielen 1 und 2 folgt, daß die erfindungsgemäße Verwendung von Polyisobutylen oder Blends aus Polyisobutylen und Thermoplasten zur Entsorgung schadstoffhaltiger Feststoffe und Stäube gut geeignet ist.

**Patentansprüche**

1. Verwendung von Polyisobutylen eines viskositätsmittleren Molekulargewichts ($M_v$) von $0,1 \cdot 10^6$ bis $1,0 \cdot 10^7$ zur Erzielung einer wasserfesten Endlagerbarkeit seiner Mischungen mit schadstoffhaltigen Feststoffen und/oder Stäuben aus der Gruppe: schwermetallhaltige Katalysatorrückstände, Flugasche, verunreinigte Schlacke und Kohle, kontaminiertes Erdreich, Asbest und asbesthaltige Produkte sowie Abraum aus Bergwerken.

2. Die Verwendung nach Anspruch 1, dadurch gekernzeichnet, daß ein Blend aus 20 bis 80 Gew.-% des Polyisobutylens mit 20 bis 80 Gew.-% eines hiermit verträglichen Thermoplasten aus der Gruppe Polyester, Polycarbonat, Polyacrylat, Polymethacrylat, Polystyrol und Polyolefin eingesetzt wird.

3. Die Verwendung nach Anspruch 2, dadurch gekennzeichnet, daß es sich bei einem der Thermoplaste um Polypropylen handelt.

4. Die Verwendung nach den Ansprüchen 1, 2 oder 3, dadurch gekennzeichnet, daß die schadstoffhaltigen Stoffe Katalysatorrückstände sind.

5. Verfahren zur sicheren Entsorgung von schadstoffhaltigen Feststoffen und/oder Stäuben aus der Gruppe: schwermetallhaltige Katalysatorrückstände, Flugasche, verunreinigte Schlacke und Kohle, kontaminiertes Erdreich, Asbest und asbesthaltige Produkte sowie Anraum aus Bergwerken durch deren Vermischen mit thermoplastisch verformbarem polymerem Material und Weiterverarbeiten der resultierenden Gemische zu Granulaten oder Formteilen, dadurch gekennzeichnet, daß man als thermoplastisch verformbares polymeres Material Polyisobutylen mit einem viskositätsmittleren Molekulargewichts ($M_v$) von $0,1 \cdot 10^6$ bis $1,0 \cdot 10^7$ verwendet und die weiterverarbeiteten Gemische anschließend auf einer Deponie endlagert.

6. Das Verfahren nach Anspruch 5, dadurch gekennzeichnet, daß Blends aus 20 bis 80 Gew.-% Polyisobutylen und 80 bis 20 Gew.-% hiermit verträglicher Thermoplaste verwendet werden, wobei letztere aus der Gruppe Polyester, Polycarbonat, Polyacrylat, Polymethacrylat, Polystyrol und Polyolefin stammen.

7. Das Verfahren nach Anspruch 5 oder 6, dadurch gekennzeichnet, daß es sich bei mindestens einem der Thermoplaste um Polypropylen handelt.

8. Das Verfahren nach Anspruch 5 bis 7, dadurch gekennzeichnet, daß die Vermischung der schadstoffhaltigen Feststoffe und/oder Stäube mit den thermoplastisch verformbaren polymeren Materialien durch Kalandrieren, Kneten oder Extrudieren erfolgt.

9. Das Verfahren nach einem der Ansprüche 5 bis 8, dadurch gekennzeichnet, daß man Polyisobutylenabfälle verwendet.

**Claims**

1. The use of polyisobutylene of a viscosity-average molecular weight ($M_v$) of from $0,1 \cdot 10^6$ to $1,0 \cdot 10^7$ for achieving a water-resistant final storability of its mixtures with pollutant-containing solids and/or dusts selected from the group consisting of: heavy-metal-containing catalyst residues, fly ash, polluted slag and coal, contaminated soil, asbestos and asbestos-containing products and mining spoil.

2. The use as claimed in claim 1, wherein use is made of a blend of from 20 to 80% by weight of polyisobutylene with from 20 to 80% by weight of a thermoplastic compatible therewith selected from the group consisting of polyester, polycarbonate, polyacrylate, polymethacrylate, polystyrene and polyolefin.

3. The use as claimed in claim 2, wherein one of the thermoplastics is polypropylene.

4. The use as claimed in claim 1, 2 or 3, wherein the pollutant-containing substances are catalyst residues.

5. A process for the safe disposal of pollutant-containing solids and/or dusts selected from the group consisting of: heavy-metal-containing catalyst residues, fly ash, polluted slag and coal, contaminated soil, asbestos and asbestos-containing products and mining spoil by mixing them with thermoplastically deformable polymeric material and further processing the resultant mixtures to form granules or moldings, which comprises using as thermoplastically deformable polymeric material polyisobutylene having a viscosity-average molecular weight ($M_v$) of from 0.1 . $10^6$ to 1.0 . $10^7$ and then finally committing the further processed mixtures to a landfill.

6. A process as claimed in claim 5, wherein use is made of blends of from 20 to 80% by weight of polyisobutylene and from 80 to 20% by weight of thermoplastics compatible therewith, with the latter originating from the group consisting of polyester, polycarbonate, polyacrylate, polymethacrylate, polystyrene and polyolefin.

7. A process as claimed in claim 5 or 6, wherein at least one of the thermoplastics is polypropylene.

8. A process as claimed in claims 5 to 7, wherein the pollutant-containing solids and/or dusts are mixed with the thermoplastically deformable polymeric materials by calendering, kneading or extrusion.

9. A process as claimed in any of claims 5 to 8, wherein polyisobutylene waste is used.

**Revendications**

1. Utilisation de polyisobutylène d'un poids moléculaire viscosimétrique moyen ($M_v$) de 0,1.$10^6$ à 1,0.$10^7$ pour réaliser une aptitude de résistance à l'eau au stockage final de ses mélanges avec des poussières et/ou des solides contenant des agents nocifs du groupe formé par: des résidus de catalyseurs contenant des métaux lourds, des cendres volantes, des charbons et des laitiers contaminés, des terres contaminées, de l'amiante et des produits contenant de l'amiante, ainsi que des déblais de terrassement.

2. Utilisation selon la revendication 1, caractérisée en ce que l'on met en oeuvre un mélange de 20 à 80% en poids du polyisobutylène avec 20 à 80% en poids d'un thermoplastique compatible avec lui et choisi parmi le groupe formé par des polyesters, des polycarbonates, des polyacrylates, des polyméthacrylates, des polystyrènes et des polyoléfines.

3. Utilisation selon la revendication 2, caractérisée en ce que l'un des thermoplastiques est du polypropylène.

4. Utilisation selon la revendication 1, 2 ou 3, caractérisée en ce que les substances contenant des agents nocifs sont des résidus de catalyseur.

5. Procédé de rejet sûr de solides contenant des agents nocifs et/ou des poussières appartenant au groupe formé par: des résidus de catalyseurs contenant des métaux lourds, des cendres volantes, des charbons et des laitiers contaminés, des terres contaminées, de l'amiante et des produits contenant de l'amiante, ainsi que des déblais de terrassement, par mélange avec un matériau polymère thermoplastique façonnable et retraitement du mélange résultant en granulés ou en articles façonnés, caractérisé en ce que l'on utilise comme matériau polymère thermoplastique façonnable du polyisobutylène d'un poids moléculaire viscosimétrique moyen ($M_v$) de 0,1.$10^6$ à 1,0.$10^7$ et que le mélange retraité est ensuite rejeté sur décharge.

6. Procédé selon la revendication 5, caractérisé en ce que l'on utilise des mélanges de 20 à 80% en poids de polyisobutylène et 80 à 20% en poids de thermoplastiques compatibles avec lui, ces derniers appartenant au groupe formé par les polyesters, les polycarbonates, les polyacrylates, les polyméthacrylates, les polystyrènes et les polyoléfines.

7. Procédé selon la revendication 5 ou 6, caractérisé en ce que l'un au moins des thermoplastiques est du polypropylène.

8. Procédé selon les revendications 5 à 7, caractérisé en ce que le mélange des poussières et/ou des solides contenant des agents nocifs avec les matériaux polymères thermoplastiques façonnables est effectué par calandrage, malaxage ou extrusion.

9. Procédé selon l'une des revendications 5 à 8, caractérisé en ce que l'on utilise des déchets de polyisobutylène.